# EUROPEAN PATENT APPLICATION

(11) **EP 1 342 652 A2**
(43) Date of publication of application: **10.09.2003**
(21) Application number: 03075654.8
(22) Date of filing: 06.03.2003
(51) Int. Cl.: B62H 5/00

(54) **A bicycle lock**

(30) Priority: 08.03.2002 DK 200200357
(71) Applicant: STENMAN HOLLAND B.V., NL-3903 AV Veenendaal (NL)
(72) Inventor: de Roos, Hendrik, 3901 WH Veenendaal (NL)
(74) Representative: Larsen, Hans Ole

(57) **Abstract**

A bicycle lock according to the invention comprising a receiving part into which a locking pin (5) may be inserted and locked by means of a pawl (8) capable of engaging a recessed groove (6) in the locking pin (5).

The pawl (8) is part of a bent spring member (7) and is the only part in the resilient pawl system.

A pin (13) mounted eccentrically at the end of the locking cylinder (12) will be capable of lifting the pawl (8) out of its locking engagement in the locking pin (5) by rotation.

Since the spring element thus forms both the resilient part and the pawl part, the structure may be made compact and thus constitute a stable pattern of movement. This minimizes the risk of locking failure because of play, spring breakage or natural oscillations.

The receiving part moreover accommodates a cover plate (16) at the bottom of the housing (3) to protect the groove (5) of the locking pin (6) and to protect against rotation of the locking cylinder in the receiving part.

## Description

### State of the art

The invention relates to a bicycle lock to be mounted on the wheel fork of a bicycle, a moped or similar two-wheeled vehicle and comprising a holding part which is mounted on one part of the fork, and in which a blocking element in the form of a locking pin is rotatably mounted and is swingable between a release position in which the locking pin points in a direction substantially in parallel with said leg, and a blocking position in which the locking pin extends between the wheel spokes and is received with its end in a receiving part mounted on the other leg of the fork, said locking pin being provided near its end tip with a recessed portion in which a pawl in the receiving part may engage for locking and be released by rotation of a locking cylinder.

Locks of this type are known in a variety of embodiments.

In a known structure, both the locking cylinder and the pawl are affected by a coil spring so that unlocking takes place by rotation against a spring force, and where the pawl, when locked, is retained in its locking engagement in the locking pin by means of the spring force.

This structure, however, is relatively vulnerable because of the relatively long twisted spring wire which may be caused to oscillate in certain situations and thereby cause the spring force against the pawl to cease instantaneously, thereby enabling the pawl to be released from its locking engagement with the locking pin.

To remedy this defect, it is known from other structures to replace the coil spring by a rigid connecting arm between the locking cylinder and the pawl.

A compression spring pressing against this connecting arm is mounted for pressing the pawl down. Since this spring must have a limited length owing to space considerations, it is often made of rubber.

This rubber spring, however, has the drawback that it serves more as a damper than as a spring.

Particularly in cold weather, the spring force is very limited, which results in a low active spring force against the pawl. This involves the risk that the pawl may be knocked out of its locking engagement with the locking pin.

To this should be added that the rotation of the locking cylinder at unlocking is impeded by the resistance to compression which a cold rubber spring exerts.

Finally, the known locks are relatively vulnerable to violent attacks, as the groove of the locking pin is poorly protected against unauthorized manipulation, e.g. by means of a pointed tool, so that the locking pin when subjected to this violence may be pressed out of its engagement, and the lock is thereby broken.

### Object of the invention

The object of the invention is to remedy these defects and drawbacks of the known locks, and this is achieved by a lock according to the invention when the pawl is made of a length of bent spring wire whose one end constitutes the pawl, which is pressed down into the recessed portion by spring force to secure the locking pin and is lifted out of the engagement by rotation of the locking cylinder to release the locking pin.

By thus allowing a length of spring wire alone to form the spring member as well as the pawl, a very compact, sturdy and reliable structure is achieved.

One end of the spring member directly forms the pawl, which involves a direct spring loading without any need for additional spring impacts, and thereby no risk of the locked engagement being weakened by impacts, oscillations and similar forces. As long as the spring is intact and in a locked position, the locking pin is secured in an unprecedentedly safe manner.

Unlocking likewise takes place in a direct manner, as it merely consists of transferring the rotation of the locking cylinder to a pressure impact on the spring and thereby for moving the free end of the spring away from the locking pin, resulting in unlocking.

This simplified structure involves no operational inconvenience, but exclusively advantages in that the lock is more sturdy and safe in use.

When, as stated in claim 2, the end of the rotatable locking cylinder is provided with an eccentrically arranged pin engaging the spring, the rotation for unlocking will take place against the spring force which moves the spring end, the pawl, out of its engagement. This impact is therefore also a direct impact which is sturdy and effective.

When, as stated in claim 3, the spring is configured such that the part of the spring affected by the cylinder constitutes part of the free end of the spring, there will be no friction to overcome.

When, as stated in claim 4, the secured remaining part of the spring member is configured as a plane part, the spring member may be mounted merely by inserting it into a receiving opening in the lock housing.

When, as stated in claim 5, the transition between the secured part and the resilient part is a bend of the spring, the spring force will be optimum and reliable.

When, as stated in claims 6 and 7, a cover plate is mounted at the end of the lock and the plate is provided with a bent part having a recess, this bent part can extend around the groove in the locking pin and thereby effectively protect the locking pin against unauthorized manipulation.

Finally, it is expedient, as stated in claim 8, to provide the cover plate with a hole with which a pin in the locking housing may engage, thereby preventing the plate from being rotated and thus the lock against being broken by rotation.

### The drawing

An embodiment of a receiving part according to the invention will be described more fully below with reference to the drawing, in which
- fig. 1: shows an exploded view of the receiving part prior to assem- bly, and
- fig. 2: shows a sectional view of the receiving part in a locked state, seen toward the locking cylinder.

### Description of an example of an embodiment

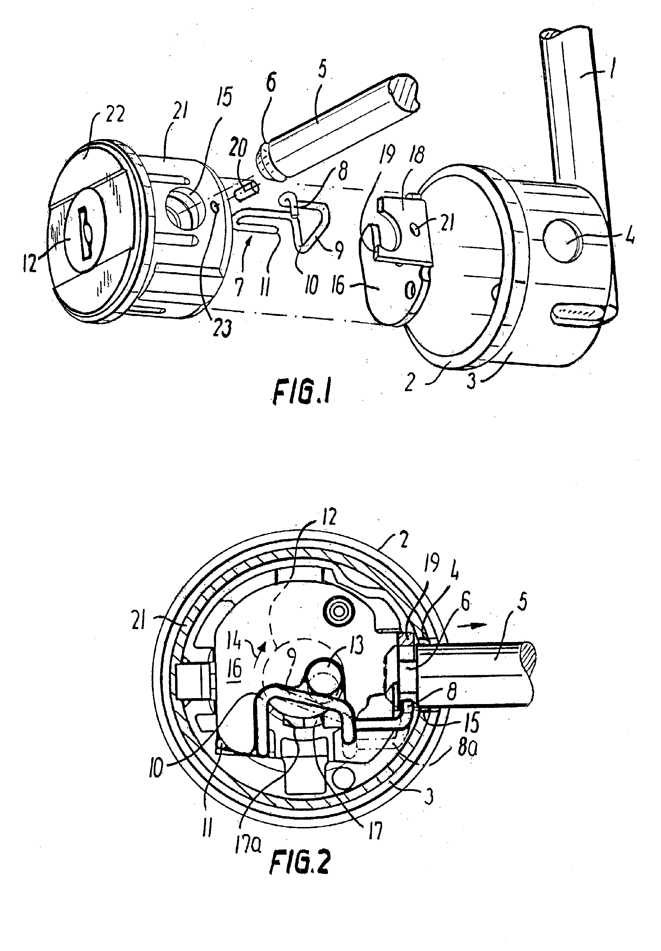

The drawing shows an example of an embodiment of the receiving part with the lock, mounted either directly on a fork leg (not shown) of the frame, or, as indicated in fig. 1, on a bracket member 1, on whose other leg the other part of the lock, the holding part with the locking pin, is mounted.

As shown in fig. 1, the receiving part is incorporated in a housing 3, which is formed in a known manner as a cylindrical shell with a bottom made of metal. This shell 3 has an opening 4 into which the locking pin 5 may be inserted, as will be explained later.

The shell may be reinforced along its rim by a reinforcing ring 2, which may be a secured steel ring or optionally a bent part of the shell itself.

The locking cylinder 12 is mounted in a housing 21 which, as shown, is formed with a bore 15 into which the locking pin 5 may be inserted and locked.

A plate 22 to cover the housing 21 is mounted at the end of the receiving part, as shown in fig. 1.

The locking parts are formed by a pawl which is capable of engaging a groove, a recessed portion, 6 on the locking pin 5 near its free end.

The pawl is formed as an integral part of a length of bent spring wire 7, as shown in fig. 1, and such that one end is terminated by a bent part that forms the pawl itself.

For this free pawl part 8 to move into and out of engagement with the locking pin 5, the following part of the spring is cranked and comprises an obliquely extending part 9 which is disposed at the end of the locking cylinder when the parts are assembled.

This obliquely extending spring member 9 is an engagement face for an eccentrically mounted pin 13 on the locking cylinder, as will be explained later.

Finally, the spring member is formed as a plane strap 11 at its other end, as shown in fig. 1. This strap 11 is the securing part, as it may be inserted into the locking housing 21 from behind, whereby the spring member is secured, and such that the free part 8, 9 of the spring member can yield in the area around the bend 10.

The spring force is hereby concentrated around a specific point of movement which ensures a precise movement of the free part with the pawl 8 both at locking when the locking pin 5 is inserted, and at unlocking when the locking cylinder with the pin 13 is rotated toward the obliquely extending spring member 9.

Finally, the receiving part is provided with a cover plate 16 to protect and hold the parts together in the receiving part. This cover plate 16 is made of a plate member with a bend 18.

This bend 18 extends internally around the receiving hole 15 for the locking pin 5 and is provided with a recess 19 to allow the locking pin 5 to pass and thereby cover the groove 6 on the locking pin 5, as will appear from fig. 2. Hereby, the locking pin cannot easily be attacked with a pointed tool as it is protected below the plate 19. Also when forces like hammering are applied to the locking pin 5, the steel plate 16 hooks into the groove 6, thereby holding the locking pin 5.

Furthermore, the bend 18 is provided with a hole 24 into which a pin 20 may be inserted through a bore 23 in the locking housing 21, as indicated in fig. 1. This prevents the plate 16 from being twisted around by violence, thereby ensuring that the pawl cannot readily be rotated out of its locking engagement. Instead of a pin, the plate 16 may be provided with a bend (not shown), which is capable of engaging a recess in the locking housing 21.

The mode of operation of the lock will now be described with reference to fig. 2, which is a sectional view of the locked locking pin seen toward the locking cylinder, i.e. in the position assumed by the bicycle lock when it is in its locked position, where the locking pin extends transversely through the path of movement of the wheel between the fork legs.

It is noted that the spring member 7 is mounted with the holding part 11 positioned below the locking cylinder 12 itself, which is indicated in dashed line.

A pin 13 is eccentrically secured at the end of the rotatable cylinder, said pin engaging the upper side of the obliquely extending spring member 9.

It is moreover noted that the end of the wire with the pawl member 8 extends inside the receiving hole 15 so that it can be engaged with and be disengaged from the locking pin 5 when this is in its inserted position, as indicated in solid line. When the lock is unlocked, the spring member and thereby the pawl member 8 are moved downwards, as indicated by the dashed position 8a.

The free part of the spring member 8, 9 may be rotated in the area around the bent member 10, which is disposed in a plane that extends in parallel with the plane of movement of the pin 13.

The pawl 8 will hereby be affected in the same plane, which ensures a precise path of movement for the spring member and thereby the pawl.

At locking, the locking part 5 is inserted, and the pawl 8 will be pressed downwards by the chamfered top of the locking pin until the groove 6 is opposite the pawl 8, which is thereby pressed up into locking engagement by the spring force, as shown in fig. 2.

At unlocking, a key (not shown) is inserted into the locking cylinder 12, which is then rotated, as indicated by an arrow 14.
The pin 13 is pressed against the spring 9 by the rotation, which is thereby bent downwards and thus releases the pawl 8 from its engagement, as indicated in dashed line 8a. The locking pin 5 may then be moved out of the receiving part and be rotated into position free of the spokes of the wheel.

This compact structure is a considerable advantage by ensuring the precise pattern of movement of the movable parts, but also in that there is no possibility of play or uncontrollable movements occurring even by strong external impacts. This ensures the maximum mode of operation and locking reliability.

## Claims

1. A bicycle lock to be mounted on the wheel fork of a bicycle, moped or similar two-wheeled vehicle, and comprising a holding part which is mounted on one leg of the fork, and in which a blocking element in the form of a locking pin is rotatably mounted and is swingable between a release position in which the locking pin points in a direction substantially in parallel with said leg, and a blocking position in which the locking pin extends between the wheel spokes and is received with its end in a receiving part mounted on the other leg of the fork, said locking pin being provided near its end tip with a recessed portion in which a pawl in the receiving part may engage for locking and be released by rotation of a locking cylinder,
**characterized in that** the pawl is made of a length of bent spring wire (7) whose one end (8) constitutes the pawl, which is pressed into the recessed portion (6) by spring force to secure the locking pin (5) and is lifted out of the engagement by rotation (14) of the locking cylinder (12) to release the locking pin (5).

2. A bicycle lock according to claim 1, **characterized in that** the locking cylinder (12) is provided with an eccentrically mounted pressure member (13) which presses the spring (7) by rotation (14) of the cylinder so that the pawl (8) is released from its engagement in the recessed portion (6) of the locking pin (5).

3. A bicycle lock according to claim 2, **characterized in that** the pawl (8) and the spring part (9) affected by the pressure member (13) constitute a freely movable resilient part of the spring (7).

4. A bicycle lock according to claim 3, **characterized in that** the remaining part of the spring (7) is formed as a plane part (11) which extends in the receiving part such that the spring part (8, 9) may be moved freely

5. A bicycle lock according to claim 4, **characterized in that** the transition between the secured part (11) and the resilient part (8, 9) is formed by a bent spring part (10).

6. A bicycle lock according to claims 1-5, **characterized in that** a cover plate (16) is mounted in the receiving part at the end of the spring (7), said plate (16) being provided with a bent part (18) having a recess (19) which extends around the opening (15) for the locking pin (5) in the locking housing (21) to partially cover the recessed portion (6) of the locking pin (5).

7. A bicycle lock according to claim 6, **characterized in that** the recess (19) extends opposite the spring pawl (8).

8. A bicycle lock according to claims 6 and 7, **characterized in that** the bent part (18) is additionally provided with a hole (24) into which a pin (20) may be inserted through a bore (23) in the locking housing (21) to retain the position of the plate (16) in the receiving part.
